# EUROPÄISCHE PATENTSCHRIFT

(11) **EP 0 450 002 B1**
(45) Veröffentlichungstag und Bekanntmachung des Hinweises auf die Patenterteilung: **26.01.1994**
(21) Anmeldenummer: 90913172.4
(22) Anmeldetag: 08.09.1990
(51) Int. Cl.: B60T 8/42

(54) **BLOCKIERGESCHÜTZTE, HYDRAULISCHE BREMSANLAGE**
ANTI-LOCK HYDRAULIC BRAKING SYSTEM
SYSTEME DE FREINAGE HYDRAULIQUE ANTI-BLOCAGE

(30) Priorität: 17.10.1989 DE 3934624
(43) Veröffentlichungstag der Anmeldung: 09.10.1991
(73) Patentinhaber: ITT Automotive Europe GmbH, 60488 Frankfurt (DE)
(72) Erfinder: BURGDORF, Jochen, D-6050 Offenbach-Rumpenheim (DE); HASELWANTER, Eugen, Troy, MI 48084 (US)
(86) Internationale Anmeldenummer: EP9001521
(87) Internationale Veröffentlichungsnummer: WO9105689

(56) Entgegenhaltungen:
- DE-A- 3 438 646
- DE-A- 3 603 533
- US-A- 4 618 189
- PATENT ABSTACTS OF JAPAN vol.13,no.178(M-819)(3526) 26 April 1989
- PATENT ABSTRACTS OF JAPAN vol.12,no.428(M-762)(3275) 11 November 1988
- PATENT ABSTRACTS OF JAPAN vol.12,no.134 (M-689)(2981) 23April 1988

## Beschreibung

Die Erfindung bezieht sich auf eine blockiergeschützte, hydraulische Bremsanlage gemäß den Merkmalen der Ansprüche 1 und 2.

Eine derartige Bremsanlage ist in der DE-OS 36 03 533 beschrieben. Das Trennventil wird hydraulich betätigt, wobei eine erste Fläche des Ventilkörpers den Druck im Speicher und eine zweite Fläche des Ventilkörpers vom Druck in der Radbremse belastet ist. Eine schwache Rückstellfeder hält den Ventilkörper gegen einen Anschlag, wobei der Ventildurchgang geöffnet ist.

Während einer Bremsdruckregelung fördert die Pumpe in den Hochdruckspeicher, dessen Druck den Ventilkörper gegen die Wirkung der schwachen Feder bewegt und gegen einen Ventilsitz anlegt, wodurch die Bremsleitung gesperrt wird. Nach einer Druckregelung wird der Speicherdruck abgebaut, so daß der Ventilkörper unter Wirkung der schwachen Feder zurückgestellt wird.

Mit dem Trennventil wird erreicht, daß der Hauptzylinder während einer Regelung hydraulisch gesperrt ist, so daß das Bremspedal auch bei gesteigerter Fußkraft nicht weiter durchgetreten werden kann. Weiterhin erfolgen keine regelbedingte Druckschwankungen im Hauptbremszylinder, die ein Vibrieren des Pedals hervorrufen würden. Ein derartiges "ruhiges" Pedal wird aber mit dem Nachteil erkauft, daß die Gefahr besteht, daß das Trennventil nach einer Bremsdruckregelung nicht umschaltet und damit die Bremsleitung gesperrt bleibt. Dies hätte zur Folge, daß das Fahrzeug nicht mehr ausreichend abgebremst werden kann. Die Rückstellfeder in der Bremsanlage gemäß der Offenlegungsschrift kann aber nicht beliebig verstärkt werden, da dann nicht sichergestellt ist, daß das Trennventil während einer Regelung sperrt.

Aus der Druckschrift US-A-4,618,189 ist bereits eine blockiergeschützte hydraulische Bremsanlage bekannt. Zum Zwecke der Bremsdruckmodulation befindet sich im Hinterachsbremskreis ein elektromagnetisch ansteuerbares 3/3-Wegeventil, dem ein hydraulisch steuerbares Wechselventil sowie ein Trennventil stromaufwärts vorgeschaltet ist. Druck vom Tandemhauptzylinder gelangt somit über das in der Grundstellung geöffnete Trennventil und Wechselventil zum 3/3-Wegeventil, das in Abhängigkeit der jeweiligen Schaltstellung die Hinterradbremsen mit dem Tandemhauptzylinder verbindet, trennt bzw. die Hinterradbremsen über eine Pumpe mit einem die Schaltstellung des Trennventils steuernden Hochdruckspeicher verbindet. Überschüssiges Bremsdruckvolumen kann überdies während der Bremsdruckmodulation mittels eines Überdruckventils wieder dem Tandemhauptzylinder zugeführt werden. Die Bremsdruckregelung in den Hinterradbremsen erfolgt gemeinsam, hingegen soll die Bremsdruckregelung in den Vorderradbremsen radindividuell gesteuert werden, wobei das Vorderradbremssystem prinzipiell identisch zum Hinterradbremssystem aufgebaut sein soll. Dies bringt jedoch infolge des relativ hohen Bremskraftanteils der Vorderradbremsen an der Gesamtverzögerung des Fahrzeugs die Problematik mit sich, ein geeignetes Schaltungskonzept zu entwickeln, das sich durch steuer- und regelungstechnisch schnell schaltende Funktionselemente auszeichnet. Überdies ist das für den Hinterradbremskreis dargestellte Schaltungskonzept im Hinblick auf das konstruktiv aufwendige und träge Ansprech-/Umsteuerverhalten hervorgerufen durch den reibungsbehafteten Schaltkolben des Wechselventils (u.a. Klemmgefahr des Schaltkolbens) als verbesserungswürdig anzusehen. Gleiches gilt sinngemäß für die Betätigung des 3/3-Wegeventils, da gerade zum Zwecke der schnellen und zu wiederholenden Druckaufbauphase nach vorangegangenem Druckabbau in Richtung des Niederdruckspeichers, dem 3/3-Wegeventil Grenzen hinsichtlich seiner Schaltschnelligkeit gesetzt sind.

Daher ist es die Aufgabe der Erfindung, eine Bremsanlage der vorgenannten Gattung zu verbessern, die eine einfache, funktionssichere und reaktionsschnelle Regelung des Bremsdrucks sowohl in den Hinterrad- wie auch in den Vorderradbremsen ermöglicht, wobei die Bremsdruckregelung in den Vorderradbremsen radindividuell und in den Hinterradbremsen gemeinsam erfolgen soll.

Diese Aufgabe wird erfindungsgemäß durch die Merkmale des Patentanspruchs 1 gelöst. Eine alternative Lösung des Problems geht aus Patentanspruch 2 hervor.

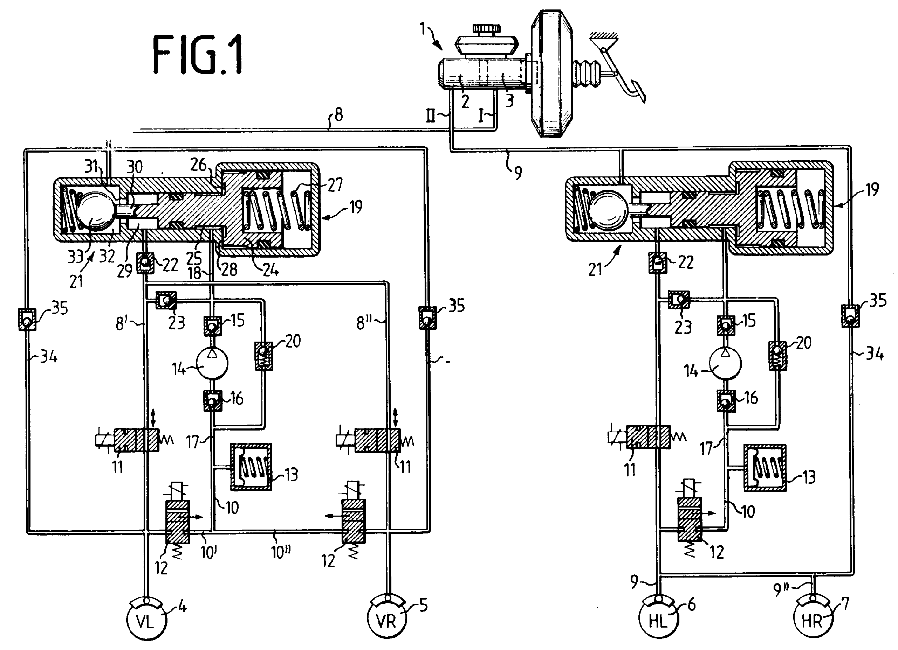

Die Erfindung soll im folgenden anhand zweier Ausführungsbeispiele näher erläutert werden. Zunächst sei auf die Figur 1 bezug genommen.

Die Bremsanlage besteht aus einem Tandemhauptbremszylinder 1 mit zwei Arbeitskammern 2 und 3, die mittels eines Schwimmkolbens voneinander getrennt sind. Mit Betätigen des symbolisch dargestellten Pedals werden die Arbeitskammern 2 und 3 unter Druck gesetzt. Jeder Arbeitskammer 2 und 3 ist ein Bremskreis I,II zugeordnet, wobei der Bremskreis I die Radbremsen der Vorderräder 4,5 (VL für vorne links und VR für vorne rechts) und der Bremskreis II die Radbremsen 6,7 der Hinterräder (HL für hinten links, HR für hinten rechts) umfaßt. Die Radbremsen 4,5 stehen über eine sich verzweigende Bremsleitung 8 (Zweigleitungen 8',8'') mit der Arbeitskammer 3 in Verbindung. Die Radbremsen 6,7 stehen über eine sich verzweigende Bremsleitung 9 (Zweigleitungen 9',9'') mit der Arbeitskammer 2 in Verbindung. In jede Zweigleitung 8',8'' ist ein elektromagnetisches Einlaßventil 11 eingefügt, das in seiner Grundstellung offen ist. Ein weiteres Einlaßventil 11 ist die Bremsleitung 9 eingefügt. Jedem Bremskreis ist ein Niederdruckspeicher 13 zugeordnet, der über eine sich verzweigende Rücklaufleitung 10 (Zweigleitungen 10',10'') mit den Radbremsen in Verbindung steht. In die Zweigleitung 10',10'' zu den Radbremsen 4,5 ist je ein Auslaßventil 12 eingefügt, das elektromagnetisch betätigt wird und in seiner Grundstellung geschlossen ist. In die Rücklaufleitung 10 der Hinterradbremsen 6,7 ist ebenfalls ein Auslaßventil 12 eingefügt, das elektromagnetisch betätigt wird und in seiner Grundstellung geschlossen ist. Die Ein- und Auslaßventile 11 und 12 werden von einer nicht dargestellten elektronischen Steuereinheit mit Schaltsignalen versorgt, die das Drehverhalten der Räder mittels Sensoren erfaßt und die benannten Schaltsignale nach einem Regelargorithmus erzeugt. Um den Druck in den Radbremsen zu erniedrigen, wird über das Auslaßventil Druckmittel in den Niederdruckspeicher 13 abgelassen. Um den Druck in den Radbremsen zu erhöhen, wird Druckmittel über das Einlaßventil 11 den Radbremsen zugeführt. In dem vorgestellten Ausführungsbeispiel wird der Druck in den Radbremsen der Vorderräder einzeln geregelt, während für die Hinterradbremsen eine gemeinsame Regelung vorgesehen ist. Jede Radbremse bzw. Radbremsgruppe steht über eine Entlastungsleitung 34, in die ein Rückschlagventil 35 eingefügt ist, unmittelbar mit der jeweils zugehörigen Arbeitskammer 2,3 in Verbindung. Das Rückschlagventil 35 öffnet zum Hauptbremszylinder. Die Anlage sieht weiterhin eine Pumpe 14 mit einem Druckventil 15 und einem Saugventil 16 vor. Die Pumpe 14 schließt mit ihrer Saugseite an die Saugleitung 17 zum Niederdruckspeicher 13 an. Ihre Druckseite führt über eine Druckleitung 18 zu einem Hochdruckspeicher 19. Parallel zur Pumpe 14 ist ein Überdruckventil 20 gechaltet, das bei einem zu hohen Druck im Hochdruckspeicher 19 Druckmittel von der Druckseite der Pumpe zur Saugseite läßt.

Beide Bremsleitungen 8 und 9 verfügen über je ein Trennventil 21, das zwischen der jeweiligen Arbeitskammer 2,3 und den Einlaßventilen 11 angeordnet ist. Weiterhin steht die Druckseite der Pumpe über ein erstes Rückschlagventil 23 mit der Bremsleitung zwischen dem Trennventil 21 und dem Einlaßventil 11 in Verbindung. Das Rückschlagventil 23 öffnet zur Bremsleitung hin. Ein zweites Rückschlagventil 22 in der Bremsleitung 8 bzw. 9 ist zwischen dem Trennventil 21 und der Einmündung der Druckseite der Pumpe in die Bremsleitungen angeordnet. Das zweite Rückschlagventil 22 sperrt zum Trennventil 21 hin. Der Speicher besteht aus einem Stufenkolben 24, der in einer entsprechend gestuften Bohrung 25 dichtned geführt ist. Der sich ausbildende Ringraum 26 dient als Speicherraum. Er ist mit der Druckseite der Pumpe 14 verbunden.

Eine starke Feder 27 ist am Stufenkolben 24 derart abgestützt, daß die Stufe des Stufenkolbens 24 an die entsprechende Stufe der Bohrung 25 angelegt ist. Die Feder 27 steht unter Vorspannung.

Das Trennventil besteht aus einem Einlaßraum 32 und einem Auslaßraum 29, die durch eine den Ventilsitz 31 bildende Bohrung miteinander verbunden sind. Der Auslaßraum 29 wird von der kleineren Stufe des Stufenkolbens 24 begrenzt. Ein Stößel 30, der an die kleinere Stufe des Stufenkolbens 24 angeformt ist, ragt durch die Bohrung hindurch und wirkt mit der Ventilkugel 33, die im Einlaßraum 32 angeordnet ist, zusammen. Befindet sich der Stufenkolben 24 in der dargestellten Grundstellung, so liegt der Stößel 30 an der Ventilkugel 33 an und hält diese in Abstand vom Ventilsitz 31. Es besteht damit ein freier Durchgang zwischen dem Hauptbremszylinder 1 und den Radbremsen. Wenn die Pumpe 14 Druckmittel in den Ringraum 25 fördert, so bewegt sich der Stufenkolben 24 gegen die Kraft der Feder 27 gemäß der Darstellung nach rechts. Damit wird auch der Stößel 30 zurückgezogen, so daß sich die Ventilkugel 33 an den Ventilsitz 31 anlegen kann. Die Bremsleitung 8 bzw. 9 ist gesperrt. Die Feder 27 steht, wie schon gesagt, unter starker Vorspannung, so daß sich, sobald sich der Stufenkolben 24 vom Anschlag 28 löst, ein hoher Druck in der Ringkammer 26 aufbaut, der in der Größenordnung zwischen 150 und 200 bar liegt. Das maximale Aufnahmevolumen des Hochdruckspeichers beträgt ca. 3 bis 4 cm³. Die in der Fig. 1 skizzierte Anlage arbeitet nach folgendem Schema.

In der Grundstellung ist die Bremsleitung offen. Die starke Speicherfeder 27 hält den Stufenkolben 24 am Anschlag 28, so daß der Stößel 30 die Ventilkugel 33 vom Ventilsitz 31 entfernt hält.

Die Einlaßventile sind geöffnet, die Auslaßventile 12 geschlossen.

Mit Betätigen des Pedals wird Druckmittel aus den Arbeitskammern 2 und 3 zu den angeschlossenen Radbremsen 4,5,6,7 verdrängt. Das Druckmittel fließt über das offene Trennventil 21, das Rückschlagventil 22 und das offene Einlaßventil 11 zur Radbremse. In den Bremskreisen und damit in den Radbremsen wird ein Druck aufgebaut, der der Pedalkraft entspricht.

Wird die Bremse gelöst, so fließt das Druckmittel aus den Radbremsen 4,5,6,7 über die Entlastungsleitung 34 mit dem Rückschlagventil 35 zurück in den Hauptbremszylinder 1.

Das Drehverhalten der Räder wird mittels Sensoren laufend überwacht, wobei die Sensorsignale durch eine nicht dargestellte elektronische Auswerteeinheit erzeugt wird, die wiederum Schaltsignale für die Ein- und Auslaßventile 11,12 sowie den Pumpenantrieb erzeugt.

Wird nun mittels der elektronischen Auswerteeinheit festgestellt, daß eines der Räder zu blockieren droht, so schaltet die Anlage in den ABS-Modus.

Der Modus beinhaltet, daß das Einlaßventil 11 gesperrt und das Auslaßventil 12 geöffnet wird. Damit fließt Druckmittel aus der blockiergefährdeten Bremse in den Niederdruckspeicher 13. Da gleichzeitig der Antrieb der Pumpe 14 eingeschaltet worden ist, wird das Druckmittel weiter in den Speicherraum 26 des Hochdruckspeichers 19 gefördert. Dadurch bewegt sich der Stufenkolben 24 gegen die Kraft der Speicherfeder 27 nach rechts, wodurch sich, wegen der Vorspannung der Feder 27, sofort ein erheblicher Druck aufbaut, der je nach Auslegung der Bremsanlage zwischen 150 und 200 bar liegt. Mit der Bewegung des Stufenkolbens 24 gibt der Stößel 30 die Ventilkugel 30 frei, so daß diese sich auf den Ventilsitz 31 setzt. Das Trennventil 21 schließt.

In der Zwischenzeit konnte durch die Druckabsenkung in der Radbremse das zugehörige Rad ausreichend wiederbeschleunigen. Zum erneuten Druckaufbau wird nun das Einlaßventil 11 geöffnet und das Auslaßventil 12 geschlossen. Nun fließt Druckmittel aus dem Speicherraum 26 über das Rückschlagventil 23 und den nun offenen Einlaßventil 11 zur Radbremse.

Durch sukzessives Öffnen und Schließen der Ein- und Auslaßventile 11 und 12 kann nun am Rad ein optimaler Schlupfwert eingestellt werden, indem der Druck in der Radbremse den zwischen Reifen und Fahrbahn übertragbaren Kräften angepaßt wird. Während einer derartigen Regelung wird dem Speicher 19 stets Druckmittel zugeführt und wieder entnommen. Es wird aber stets eine kleine Restmenge verbleiben, die ausreicht, das Trennventil 21 gesperrt zu halten. Während einer Regelung ist daher der Hauptbremszylinder 1 von den Radbremsen abgekoppelt und hydraulisch gesperrt, so daß das Pedal in der Position verbleibt, die es bei Beginn der Bremsschlupfregelung erreicht hatte.

Wird allerdings die Pedalkraft soweit gesenkt, daß der zugehörige Druck im Hauptbremszylinder 1 niedriger wird als der eingeregelte Druck in einer Radbremse, so erfolgt ein Druckausgleich über das Rückschlagventil 35. Mit der Pedalkraft wird somit weiterhin der maximale Druck in der Radbremse bestimmt. Mit Beendigung einer Regelbremsung wird der Pumpenantrieb unterbrochen, so daß kein erneutes Druckmittel in den Speicher 19 gelangt. Der Speicherraum 26 entleert sich über das Rückschlagventil 23, dem offenen Einlaßventil 11 und dem Rückschlagventil 35 in den drucklosen Hauptbremszylinder. Die Feder 27 bewegt den Stufenkolben 24 nach links, wodurch das Trennventil 21 geöffnet wird.

Das Überdruckventil 20 hat die Aufgabe, den Druck an der Druckseite der Pumpe und damit im Speicher zu begrenzen. Ist der Grenzdruck erreicht, so öffnet das Ventil, so daß nun ein Teil der Druckmittelmenge von der Pumpe ständig umgepumpt wird bzw. im Niederdruckspeicher 13 in Reserve gehalten wird.

Gemäß der Fig. 1 bilden die Radbremsen der Vorderräder und die Radbremsen der Hinterräder jeweils einen Bremskreis mit dem Unterschied, daß die Radbremsen der Vorderräder einzeln geregelt werden, während bei den Radbremsen der Hinterachse eine gemeinsame Regelung erfolgt. Ansonsten sind die Bremskreise gleich aufgebaut und weisen jeweils einen Niederdruckspeicher 13, eine Pumpe 14, einen Hochdruckspeicher 19 sowie ein Trennventil auf.

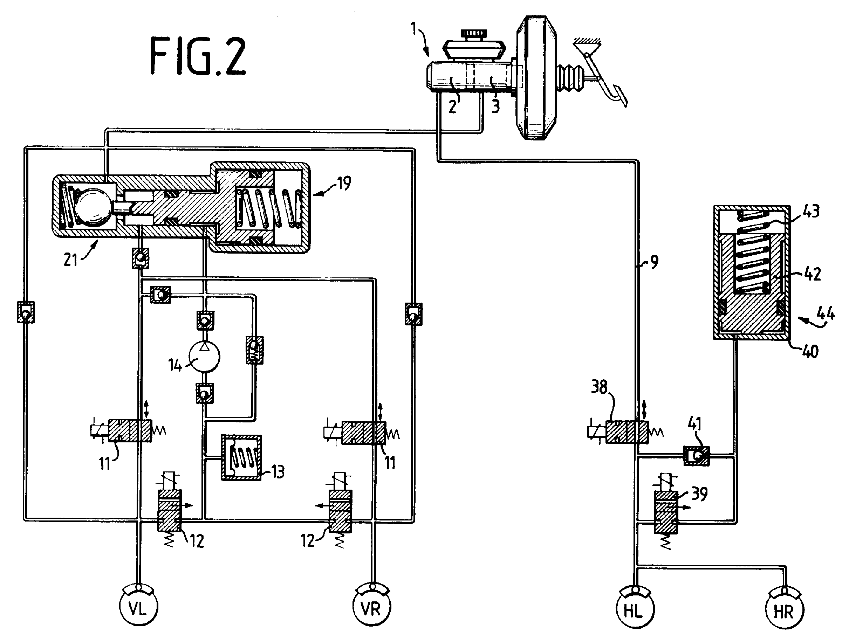

In der Fig. 2 ist eine alternative Bremsanlage aufgezeichnet. Der Vorderradbremskreis entspricht dem Bremskreis der Fig. 1. Der Hinterradbremskreis besteht aus einem Zulaufventil 38 sowie einem Ablaufventil 39. Weiterhin ist vorgesehen ein Niederdruckspeicher 44. Dieser besteht aus einem Speicherraum 40, einem den Speicherraum 40 begrenzenden Kolben 42 und einer Rückstellfeder 43. Die Ventile 38 und 39 werden wie folgt angesteuert. Wenn eines der Hinterräder zu blockieren droht, wird das Zulaufventil 38 geschlossen und das Ablaufventil 39 geöffnet. Dadurch fließt Druckmittel aus den Radbremsen in den Speicher 40, der in seiner Größe so bemessen ist, daß er ggf. das gesamte Druckmittelvolumen des Bremskreises aufnehmen kann. Bei der Feder 43 handelt es sich um eine schwache Rückstellfeder, so daß keine wesentliche Druckerhöhung im Zwischenspeicher 44 stattfindet.

Das Ablaufventil 39 wird so lange betätigt, bis der Druck in den Radbremsen so weit gesenkt ist, bis beide Räder aus der Blockiergefahr heraus sind. Das Ablaufventil 39 schaltet wieder zurück in seine Sperrposition, während das Zulaufventil 38 erregt bleibt und weiterhin die Bremsleitung 9 sperrt.

Mit dieser sehr einfachen Ansteuerung wird bewirkt, daß die Hinterräder auf keinen Fall blockieren. Die Einstellung eines optimalen Schlupfwertes ist allerdings nicht möglich.

Das Zulaufventil 38 öffnet erst wieder, wenn der Bremsvorgang beendet ist. Dann kann sich der Speicher 44 über das Rückschlagventil 41 und das offene Zulaufventil 38 in den Hauptbremszylinder 1 entleeren, um bei einer erneuten Bremsung wieder aufnahmefähig zu sein.

### Bezugszeichenliste

- 1: Tandem-Hauptbremszylinder
- 2: Arbeitskammer
- 3: Arbeitskammer
- 4,5,6,7: Radbremsen
- 8: Bremsleitung
- 8',8'': Zweigleitung der Bremsleitung
- 9: Bremsleitung
- 9',9'': Zweigleitung der Bremsleitung
- 10: Rücklaufleitung
- 11: Einlaßventil
- 12: Auslaßventil
- 13: Niederdruckspeicher
- 14: Pumpe
- 15: Druckventil
- 16: Saugventil
- 17: Saugleitung
- 18: Druckleitung
- 19: Hochdruckspeicher
- 20: Überdruckventil
- 21: Trennventil
- 22: zweites Rückschlagventil
- 23: erstes Rückschlagventil
- 24: Stufenkolben
- 25: Stufenbohrung
- 26: Ringraum, Speicherraum
- 27: Speicherfeder
- 28: Anschlag
- 29: Auslaßraum
- 30: Stößel
- 31: Ventilsitz
- 32: Einlaßraum
- 33: Ventilkugel
- 34: Enlastungsleitung
- 35: Rückschlagventil

- 38: Zulaufventil
- 39: Ablaufventil
- 40: Speicherraum
- 41: Rückschlagventil
- 42: Speicherkolben
- 43: Rückstellfeder
- 44: Zwischenspeicher

## Patentansprüche

1. Blockiergeschützte, hydraulische Bremsanlage mit einem zwei Arbeitskammern (2, 3) aufweisenden Tandemhauptbremszylinder (1), wobei jeder Arbeitskammer (2, 3) ein Bremskreis (I, II) zugeordnet ist, wobei der erste Bremskreis die Radbremsen (4, 5) der Vorderräder (VL, VR) und der zweite Bremskreis (II) die Radbremsen (6, 7) der Hinterräder (HL, HR) umfaßt, wobei die Radbremsen (4, 5) der Vorderräder (VL, VR) über eine sich in Zweigleitungen (8', 8'') verzweigende Bremsleitung (8) mit der einen Arbeitskammer (3) in Verbindung stehen und die Radbremsen (6, 7) der Hinterräder (HR, HL) über eine sich verzweigende Bremsleitung (9) mit der anderen Arbeitskammer (2) in Verbindung stehen, mit jeweils einem in jeder Zweigleitung (8', 8'') der Radbremsen (4, 5) der Vorderräder (VL, VR) eingefügten elektromagnetischen Einlaßventil (11), das in seiner offenen Grundstellung eine hydraulische Verbindung zwischen einem Trennventil (21) und den Radbremsen (4, 5) der Vorderräder (VL, VR) herstellt, mit einem jedem Bremskreis zugeordneten Niederdruckspeicher (13), der über eine sich verzweigende Rücklaufleitung (10) mit den Radbremsen (4, 5, 6, 7) in Verbindung steht, wobei in die verzweigte Rücklaufleitung (10) zu den Radbremsen (4, 5) der Vorderräder (VL, VR) je ein Auslaßventil (12) eingefügt ist, das elektromagnetisch betätigbar ist und das in seiner Grundstellung geschlossen verharrt, mit einem in die Rücklaufleitung (10) der Hinterradbremsen (6, 7) eingefügten Auslaßventil (12), das elektromagnetisch betätigbar ist und das in seiner Grundstellung geschlossen verharrt, mit einer jeder Radbremse (4, 5, 6, 7) oder Radbremsgruppe (HL, HR; VL, VR) zugeordneten Entlastungsleitung (34), in die ein in Richtung des Tandemhauptzylinders (1) öffnendes Rückschlagventil (35) eingefügt ist und die unmittelbar mit der jeweils zugehörigen Arbeitskammer (2, 3) in Verbindung steht, mit einer Pumpe (14) für jeden Bremskreis (I, II), die im ersten Bremskreis (I) mit ihrer Saugseite an den Zweigleitungen (10' 10'') der den Druck der Vorderradbremsen steuernden Auslaßventile (12) anschließt und die im zweiten Bremskreis an der das Auslaßventil (12) aufweisenden Rücklaufleitung (10) beider Hinterradbremsen anschließt, wobei jeweils die Druckseite jeder Pumpe (14) jeweils zu einem Hochdruckspeicher (19) verbunden ist, sowie mit einem zur Pumpe (14) parallel angeordneten Überdruckventil, das bei einem zu hohen Druck im Hochdruckspeicher (19) Druckmittel von der Druckseite der Pumpe (14) zur Saugseite läßt, mit in jede Bremsleitung (8, 9) eingesetzte Trennventile (21), die zwischen der jeweiligen Arbeitskammer (2, 3) und den Einlaßventilen (11) angeordnet sind, mit einer Verbindung der Druckseite der Pumpe (14) über jeweils ein erstes Rückschlagventil (23) mit jeweils den zwischen dem jeweiligen Trennventil (21) und dem zugehörigen Einlaßventil (11) zugeordneten Bremsleitungen, wobei das Einlaßventil (11) in Richtung den Bremsleitungen (8, 9) öffnet, mit jeweils einem zweiten, in Richtung der Trennventile (21) sperrenden Rückschlagventil (22), das in den Bremsleitungen (8, 9) angeordnet ist, wobei das Rückschlagventil (22) jeweils zwischen dem Trennventil (21) und der Einmündung der Druckseite der Pumpe in die Bremsleitung (8, 9) angeordnet ist.

2. Blockiergeschützte, hydraulische Bremsanlage, mit einem zwei Arbeitskammern (2, 3) aufweisenden Tandemhauptbremszylinder (1), wobei jede Arbeitskammer (2, 3) ein Bremskreis (I, II) zugeordnet ist, wobei der erste Bremskreis (I) die Radbremsen (4, 5) der Vorderräder (VL, VR) und der zweite Bremskreis (II) die Radbremsen (6, 7) der Hinterräder (HL, HR) umfaßt, wobei die Radbremsen (4, 5) der Vorderräder (VL, VR) über eine sich in Zweigleitungen (8', 8'') verzweigende Bremsleitung (8) mit der einen Arbeitskammer (3) in Verbindung stehen und die Radbremsen (6, 7) der Hinterräder (HL, HR) über eine Bremsleitung (9) mit der weiteren Arbeitskammer (2) in Verbindung stehen, mit jeweils einem in jede Zweigleitung (8', 8'') der Vorderradbremsen eingefügten elektromagnetischen Einlaßventil (11), das in seiner offenen Grundstellung eine hydraulische Verbindung zwischen einem Trennventil (21) und den Radbremsen (4, 5) der Vorderräder (VL, VR) herstellt, mit einem dem ersten Bremskreis (I) zugeordneten Niederdruckspeicher (13), der über eine sich verzweigende Rücklaufleitung (10) mit den Radbremsen (4, 5) der Vorderräder (VL, VR) in Verbindung steht, wobei in die verzweigte Rücklaufleitung (10) zu den Radbremsen (4, 5) der Vorderräder je ein Auslaßventil (12) eingefügt ist, das elektromagnetisch betätigbar ist und in seiner Grundstellung geschlossen ist, mit einem in die Rücklaufleitung (10) der Hinterradbremsen (HL, HR) eingefügten Ablaufventil (39), das elektromagnetisch betätigbar ist und in seiner Grundstellung geschlossen verharrt, mit einer jeder Radbremse (4, 5, 6, 7) oder Radbremsgruppe (HL, HR; VL, VR) zugeordneten Entlastungsleitung (34), in die eine in Richtung des Tandemhauptzylinders (1) öffnenden Rückschlagventil (35, 41) eingefügt ist, die mit der jeweils zugehörigen Arbeitskammer (2, 3) verbindbar ist, mit einer Pumpe (14) für den ersten Bremskreis (I), die im ersten Bremskreis (I) mit ihrer Saugseite an den Zweigleitungen (10', 10''), welche die Auslaßventile (12) für die Vorderradbremsen aufweisen, anschließt, wobei die Druckseite der Pumpe (14) jeweils zu einem Hochdruckspeicher (19) verbunden ist, mit einem Trennventil (21), das in die zu den Vorderradbremsen führenden Bremsleitung (8) eingesetzt ist und das zwischen der Arbeitskammer (3) und den Einlaßventilen (11) angeordnet ist, mit einer Verbindung der Druckseite der Pumpe (14) über ein erstes Rückschlagventil (23) mit der zwischen dem Trennventil (21) und dem Einlaßventil (11) gelegenen Bremsleitung (8), wobei das Rückschlagventil (23) zur Bremsleitung (8) hin öffnet, mit einem zweiten, in Richtung des Trennventils (21) sperrenden Rückschlagventil (22) in der Bremsleitung (8), das zwischen dem Trennventil (21) und der Einmündung der Druckseite der Pumpe in der Bremsleitung (8) angeordnet ist, mit einem im Hinterradbremskreis (Bremskreis II) angeordneten Zulaufventil (38), das zwischen der Arbeitskammer (2) und den Hinterradbremsen in einer Bremsleitung (9) angeordnet ist, mit einem Niederdruckspeicher (44), der an der das Ablaufventil (39) aufweisenden Rücklaufleitung (10) angeschlossen ist, wobei das Ablaufventil (39) während einer Druckregelung das aus den Hinterradbremsen abgelassene Druckmittel aufnimmt und wobei die Bremsleitung über ein elektromagnetisch betätigbares Zulaufventil (38) während einer Bremsdruckregelung ständig gesperrt ist.

## Claims

1. An anti-lock hydraulic brake system with a tandem master cylinder (1) comprising two working chambers (2, 3), wherein each working chamber (2, 3) is associated with a brake circuit (I, II), the first brake circuit (I) comprising the wheel brakes (4, 5) of the front wheels (VL, VR) and the second brake circuit (II) comprising the wheel brakes (6, 7) of the rear wheels (HL, HR), the wheel brakes (4, 5) of the front wheels (VL, VR) being in communication with the one working chamber (3) through a brake line (8) branching into branch lines (8', 8''), and the wheel brakes (6, 7) of the rear wheels (HL, HR) being in communication with the other working chamber (2) through a branching brake line (9), comprising each one electromagnetic inlet valve (11) inserted in each branch line (8', 8'') of the wheel brakes (4, 5) of the front wheels (VL, VR) which, in its open initial position, establishes a hydraulic connection between a separating valve (21) and the wheel brakes (4, 5) of the front wheels (VL, VR), with a low-pressure accumulator (13) allocated to each brake circuit and being in communication with the wheel brakes (4, 5, 6, 7) through a branching return line (10), with each one outlet valve (12) being inserted into the branched return line (10) leading to the wheel brakes (4, 5) of the front wheels (VL, VR) which is operable electromagnetically and which remains closed in its initial position, with an outlet valve (12) inserted into the return line (10) of the rear-wheel brakes (6, 7) which is operable electromagnetically and remains closed in its initial position, with a relief line (34) associated with each wheel brake (4, 5, 6, 7) or wheel brake group (HL, HR; VL, VR) into which a non-return valve (35) opening in the direction of the tandem master cylinder (1) is inserted and which is in direct communication with the respectively pertinent working chamber (2, 3), comprising a pump (14) for each brake circuit (I, II) which, in the first brake circuit (I), connects with its suction side to the branch lines (10', 10'') of the outlet valves (12) controlling the pressure of the front-wheel brakes and which, in the second brake circuit (II), connects to the return line (10) of both rear-wheel brakes containing the outlet valve (12), wherein the pressure side of each pump (14) is connected to a high-pressure accumulator (19) in each case, as well as comprising a pressure-relief valve arranged in parallel to the pump (14) which, in the presence of a too high pressure in the high-pressure accumulator (19), permits pressure fluid to propagate from the pressure side of the pump (14) to the suction side, comprising separating valves (21) inserted into each brake line (8, 9) which are interposed between the respective working chamber (2, 3) and the inlet valves (11), with the pressure side of the pump (14) being connected through each one first non-return valve (23) with the brake lines arranged each between the respective separating valve (21) and the associated inlet valve (11), the said inlet valve (11) opening in the direction of the brake lines (8, 9), comprising each one second non-return valve (22) closing in the direction of the separating valves (21) and being arranged in the brake lines (8, 9), the said non-return valve (22) being arranged in each case between the separating valve (21) and the point where the pressure side of the pump opens into the brake line (8, 9).

2. An anti-lock hydraulic brake system with a tandem master cylinder (1) comprising two working chambers (2, 3), wherein each working chamber (2, 3) is associated with a brake circuit (I, II), the first brake circuit (I) comprising the wheel brakes (4, 5) of the front wheels (VL, VR) and the second brake circuit (II) comprising the wheel brakes (6, 7) of the rear wheels (HL, HR), the wheel brakes (4, 5) of the front wheels (VL, VR) being in communication with the one working chamber (3) through a brake line (8) branching into branch lines (8', 8''), and the wheel brakes (6, 7) of the rear wheels (HL, HR) being in communication with the other working chamber (2) through a brake line (9), comprising each one electromagnetic inlet valve (11) inserted in each branch line (8', 8'') of the front-wheel brakes which, in its open initial position, establishes a hydraulic connection between a separating valve (21) and the wheel brakes (4, 5) of the front wheels (VL, VR), with a low-pressure accumulator (13) allocated to the first brake circuit (I) and being in communication with the wheel brakes (4, 5) of the front wheels (VL, VR) through a branching return line (10), with each one outlet valve (12) being inserted into the branched return line (10) leading to the wheel brakes (4, 5) of the front wheels which is operable electromagnetically and which is closed in its initial position, with a drain valve (39) inserted into the return line (10) of the rear-wheel brakes (HL, HR) which is operable electromagnetically and remains closed in its initial position, with a relief line (34) associated with each wheel brake (4, 5, 6, 7) or wheel brake group (HL, HR; VL, VR) into which a non-return valve (35, 41) opening in the direction of the tandem master cylinder (1) is inserted and which is connectible with the respectively pertinent working chamber (2, 3), comprising a pump (14) for the first brake circuit (I) which, in the first brake circuit (I), connects with its suction side to the branch lines (10', 10'') containing the outlet valves (12) for the front-wheel brakes, with the pressure side of the pump (14) communicating with each one high-pressure accumulator (19), comprising a separating valve (21) which is inserted into the brake line (8) leading to the front-wheel brakes and which is interposed between the working chamber (3) and the inlet valves (11), with the pressure side of the pump (14) being connected through a first non-return valve (23) with the brake line (8) arranged between the separating valve (21) and the inlet valve (11), the said non-return valve (23) opening towards the brake line (8), comprising a second non-return valve (22) in the brake line (8) closing in the direction of the separating valve (21) and being arranged between the separating valve (21) and the point where the pressure side of the pump opens into the brake line (8), comprising a supply valve (38) arranged in the rear-wheel brake circuit (brake circuit II) and interposed between the working chamber (2) and the rear-wheel brakes in a brake line (9), comprising a low-pressure accumulator (44) which is connected to the return line (10) containing the drain valve (39), the said drain valve (39) receiving during a pressure control action the pressure fluid discharged from the rear-wheel brakes, and the brake line being constantly closed during a braking pressure control action through an electromagnetically operable supply valve (38).

## Revendications

1. Système hydraulique de freinage antiblocage, comprenant :
- un maître-cylindre de frein tandem (1) comportant deux chambres de travail (2, 3), un circuit de freinage (I, II) étant associé à chaque chambre de travail (2, 3), le premier circuit de freinage (I) comprenant les freins de roues (4, 5) des roues avant (VL, VR) et le second circuit de freinage (II) comprenant les freins de roues (6, 7) des roues arrière (HL, HR), les freins de roues (4, 5) des roues avant (VL, VR) communiquant avec une première chambre de travail (3) par l'intermédiaire d'une conduite de frein (8) se divisant en branches de conduite (8', 8'') et les freins de roues (6, 7) des roues arrière (HR, HL) communiquant avec la seconde chambre de travail (2) par l'intermédiaire d'une conduite de frein (9) se divisant,
- une valve électromagnétique d'entrée (11) qui est insérée dans chacune des branches de conduite (8', 8'') des freins de roues (4, 5) des roues avant (VL, VR) et qui, dans sa position ouverte de base, produit une liaison hydraulique entre une valve de séparation (21) et les freins de roues (4, 5) des roues avant (VL, VR),
- un accumulateur à basse pression (13) qui est associé à chaque circuit de freinage et qui communique avec les freins de roues (4, 5, 6, 7) par l'intermédiaire d'une conduite de retour (10) se divisant, une valve de sortie (12) étant insérée dans la conduite de retour (10) divisée conduisant aux freins de roues (4, 5) des roues avant (VL, VR), cette valve de sortie (12) étant à actionnement électromagnétique et étant fermée dans sa position de base,
- une valve de sortie (12) insérée dans la conduite de retour (10) des freins (6, 7) des roues arrière, cette valve de sortie (12) étant à actionnement électromagnétique et restant fermée dans sa position de base,
- une conduite de décharge (34) qui est associée à chaque frein de roue (4, 5, 6,7) ou groupe de freins de roues (HL, HR ; VL, VR), et dans laquelle une valve antiretour (35) s'ouvrant vers le maître-cylindre tandem (1) est insérée et qui communique directement avec la chambre de travail (2, 3) associée,
- pour chaque circuit de freinage (I, II), une pompe (14) qui, dans le premier circuit de freinage (I), se raccorde par son côté d'aspiration aux branches de conduite (10', 10'') des valves de sortie (12) commandant la pression des freins de roues avant et qui, dans le second circuit de freinage (II), se raccorde à la conduite de retour (10) des deux freins de roues arrière qui comporte la valve de sortie (12), le côté de refoulement de chaque pompe (14) étant relié à un accumulateur à pression élevée (19),
- une valve de surpression qui est disposée parallèlement à la pompe (14) et qui laisse passer de l'agent de pression du côté de refoulement de la pompe (14) vers son côté d'aspiration dans le cas d'une pression trop élevée dans l'accumulateur à pression élevée (19),
- des valves de séparation (21) qui sont montées dans chaque conduite de frein (8, 9) et qui sont disposées entre la chambre de travail (2, 3) associée et les valves d'entrée (11),
- une liaison du côté de refoulement de la pompe (14) avec chacune des conduites de freins disposées entre la valve de séparation (21) associée et la valve d'entrée (11) associée, par l'intermédiaire d'une première valve antiretour (23) dans chaque cas, la valve d'entrée antiretour (11) s'ouvrant vers les conduites de freins (8, 9),
- pour chaque conduite de frein (8, 9), une seconde valve antiretour (22) qui se bloque vers les valves de séparation (21), qui est disposée dans les conduites de freins (8, 9), chaque valve antiretour (22) étant disposée entre la valve de séparation (21) et l'endroit où le côté de refoulement de la pompe débouche dans la conduite de frein (8, 9).

2. Système hydraulique de freinage antiblocage, comprenant :
- un maître-cylindre de frein tandem (1) comportant deux chambres de travail (2, 3), un circuit de freinage (I, II) étant associé à chaque chambre de travail (2, 3), le premier circuit de freinage (I) comprenant les freins de roues (4, 5) des roues avant (VL, VR) et le second circuit de freinage (II) comprenant les freins de roues (6, 7) des roues arrière (HL, HR), les freins de roues (4, 5) des roues avant (VL, VR) communiquant avec une première chambre de travail (3) par l'intermédiaire d'une conduite de frein (8) se divisant en branches de conduite (8', 8'') et les freins de roues (6, 7) des roues arrière (HR, HL) communiquant avec la seconde chambre de travail (2) par l'intermédiaire d'une conduite de frein (9),
- une valve électromagnétique d'entrée (11) qui est insérée dans chacune des branches de conduite (8', 8'') des freins de roues avant et qui, dans sa position ouverte de base, produit une liaison hydraulique entre une valve de séparation (21) et les freins de roues (4, 5) des roues avant (VL, VR),
- un accumulateur à basse pression (13) qui est associé au premier circuit de freinage (I) et qui communique avec les freins de roues (4, 5) des roues avant (VL, VR) par l'intermédiaire d'une conduite de retour (10) se divisant, une valve de sortie (12) étant insérée dans la conduite de retour (10) divisée conduisant aux freins de roues (4, 5) des roues avant, cette valve de sortie (12) étant à actionnement électromagnétique et étant fermée dans sa position de base,
- une valve d'évacuation (39) insérée dans la conduite de retour (10) des freins des roues arrière (HL,HR), cette valve d'évacuation (39) étant à actionnement électromagnétique et restant fermée dans sa position de base,
- une conduite de décharge (34) qui est associée à chaque frein de roue (4, 5, 6,7) ou groupe de freins de roues (HL, HR ;VL, VR), et dans laquelle une valve antiretour (35, 41) s'ouvrant vers le maître-cylindre tandem (1) est insérée et est agencée de façon à pouvoir communiquer avec la chambre de travail (2, 3) associée,
- pour le premier circuit de freinage (I), une pompe (14) qui, dans le premier circuit de freinage (I), se raccorde par son côté d'aspiration aux branches de conduite (10', 10'') qui comprennent les valves de sortie (12) associées aux freins des roues avant, le côté de refoulement de la pompe (14) étant relié à un accumulateur à pression élevée (19),
- une valve de séparation (21) qui est montée dans la conduite de frein (8) menant aux freins des roues avant et qui est disposée entre la chambre de travail (3) et les valves d'entrée (11),
- une liaison du côté de refoulement de la pompe (14) avec la conduite de freins (8) disposée entre la valve de séparation (21) et la valve d'entrée (11), par l'intermédiaire d'une première valve antiretour (23), la valve antiretour (23) s'ouvrant vers la conduite de frein (8),
- une seconde valve antiretour (22) qui se bloque vers la valve de séparation (21) et qui est disposée entre la valve de séparation (21) et l'endroit où le côté de refoulement de la pompe débouche dans la conduite de frein (8),
- une valve d'alimentation (38) qui est disposée dans le circuit des freins des roues arrière (circuit de freinage II) et qui est disposée dans une conduite de frein (9) entre la chambre de travail (2) et les freins des roues arrière,
- un accumulateur à basse pression (44) qui est raccordé à la conduite de retour (10) comportant la valve d'évacuation (39), cette valve d'évacuation (39) recevant pendant une régulation de pression l'agent de pression évacué des freins des roues arrière et la conduite de frein étant bloquée de manière permanente pendant une régulation de la pression de freinage au moyen d'une valve d'alimentation (38) à actionnement électromagnétique.
